Europäisches Patentamt

European Patent Office

Office européen des brevets

(19)

(11) Numéro de publication: **0 215 698 B1**

# (12) FASCICULE DE BREVET EUROPEEN

(45) Date de publication de fascicule du brevet:
**16.10.91**

(51) Int. Cl.5: **B29D 24/00**, B29C 67/14, B29C 67/18

(21) Numéro de dépôt: **86401818.9**

(22) Date de dépôt: **14.08.86**

(54) **Structures multicanaux en matériaux composities, procédés et demi-produits pour la fabrication de celle-ci.**

(30) Priorité: **11.09.85 FR 8513452**

(43) Date de publication de la demande:
**25.03.87 Bulletin 87/13**

(45) Mention de la délivrance du brevet:
**16.10.91 Bulletin 91/42**

(84) Etats contractants désignés:
**DE FR GB NL SE**

(56) Documents cités:

| | |
|---|---|
| **FR-A- 1 074 766** | **FR-A- 1 511 026** |
| **FR-A- 1 587 529** | **GB-A- 587 282** |
| **GB-A- 903 734** | **US-A- 3 556 448** |
| **US-A- 4 223 053** | **US-A- 4 395 450** |
| **US-A- 4 405 669** | |

(73) Titulaire: **ETAT-FRANCAIS représenté par le DELEGUE GENERAL POUR L'ARMEMENT (DPAG)**
**Bureau des Brevets et Inventions de la Délégation Générale pour l'Armement 26, Boulevard Victor**
**F-75996 Paris Armées(FR)**

(72) Inventeur: **Leone, Michel**
**Les Oréades La Colette**
**F-83260 La Crau(FR)**
Inventeur: **Carbone, Robert**
**69, rue Jean Cocteau**
**F-83120 La Garde(FR)**

EP 0 215 698 B1

## Description

La présente invention a pour objet des structures multicanaux à faible masse volumique en matériaux composites, des procédés et des demi-produits pour la fabrication de ces structures.

Le secteur technique de l'invention est celui de la construction de coques ou de panneaux à hautes performances mécaniques.

On sait que les constructions aéronautiques et navales utilisent des matériaux composites constitués par des structures multicanaux, par exemple des structures sandwich en nid d'abeille, qui permettent de réduire le poids, d'avoir de bonnes propriétés mécaniques. De telles structures composites multicanaux sont utilisées par exemple pour construire des cellules d'avion ou des coques de bateaux.

Un des objectifs de la présente invention est de procurer des structures multicanaux en matériaux composites qui peuvent être composées de plusieurs couches superposées dans lesquelles les directions des canaux sont entrecroisées afin de faire correspondre ces directions et donc les lignes de meilleure résistance mécanique du produit fini avec les directions des contraintes qu'il doit supporter.

On connaît, par exemple par les brevets FR 1 074 766, FR 1 587 529 ou US 3 556 448, sur lequel les préambules des revendications 1, 5 et 7 sont basés, de telles structures multicanaux allégées en matériaux composites, présentant plusieurs couches constituées principalement par des gaines longitudinales déterminées par deux nappes de tissu entrecroisées. Des profilés tubulaires, en matériaux légers, sont engagés dans ces gaines dans le seul but d'allégement de la structure. La résistance mécanique doit donc être assurée par le tissu alvéolaire lui-même ou par des nappes d'armatures externes. Elle est donc limitée par ces technologies connues. En outre, ces procédés de fabrication ne permettent pas l'obtention d'un produit intermédiaire présentant à la fois une grande résistance longitudinale dans le sens des alvéoles et une grande souplesse dans le sens transversal facilitant ainsi la mise en forme de la structure finale qui peut être plane ou courbe.

Un autre objectif de la présente invention est de faciliter la fabrication de structures multicanaux en matériaux composites, par l'utilisation d'un demi-produit.

Les objectifs de l'invention sont atteints par un procédé de fabrication de structures multicanaux en matériaux composites qui comporte la suite d'opérations suivantes :

- on confectionne un tissu alvéolaire par croisement de nappes formant ainsi des gaines parallèles juxtaposées; les points de croisement sont des articulations permettant une mise en forme;
- on enfile dans chaque gaine un profilé tubulaire à hautes caractéristiques mécaniques, faible masse volumique et ajusté à celle-ci;
- on met en forme le demi-produit ainsi obtenu à l'aide d'un outillage approprié;
- on étend sur chaque face du tissu alvéolaire une ou plusieurs nappes d'armature;
- et on noie le tissu alvéolaire et les armatures dans une résine polymérisable que l'on polymérise.

L'invention a pour résultat de nouvelles structures multicanaux en matériaux composites qui sont composées d'un tissu alvéolaire comportant des gaines parallèles juxtaposées, de tubes qui sont engagés chacun à l'intérieur de l'une des gaines, d'une ou plusieurs nappes d'armatures placées de part et d'autre du tissu alvéolaire contenant les tubes et de résine polymérisée qui entoure les tubes et dans laquelle le tissu alvéolaire et les armatures sont noyées.

Un avantage du procédé selon l'invention réside dans le fait que l'on peut préparer en série et fabriquer mécaniquement des nappes de tissu alvéolaire dont chaque alvéole est garnie d'un tube, lesquelles nappes peuvent être ensuite facilement stockées, transportées, manipulées et mises en place sur des outillages de fabrication, par exemple des moules et constituent un demi-produit qui facilite la fabrication des structures multicanaux.

Un autre avantage du procédé selon l'invention réside dans le fait que les nappes de tissu alvéolaire, dont chaque alvéole est garnie d'un tube, peuvent être fortement courbées dans le sens transversal et légèrement courbées dans le sens longitudinal en utilisant la flèche obtenue sur de grandes longueurs, ce qui permet de confectionner des panneaux ou des coques à forte courbure transversale, par exemple des tubes ou des cellules d'avion et même des surfaces à double courbure présentant un faible rayon de courbure dans le sens transversal aux tubes et un rayon de courbure élevé dans le sens longitudinal.

Un autre avantage du procédé selon l'invention réside dans le fait qu'il permet de réaliser des structures composites multicanaux comportant des couches entrecroisées pour mieux résister à des contraintes ayant des directions entrecroisées.

Les tubes noyés dans la structure sont par exemple des tubes armés pultrudés très résistants, qui confèrent à la structure une très bonne résistance dans le sens longitudinal aux tubes. Les nappes d'armature, qui peuvent être orientées dans des directions adaptées aux contraintes, le tissu alvéolaire et les cloisons de celui-ci confèrent aux structures une bonne résistance mécanique.

Les structures selon l'invention présentent l'avantage que les tubes qui les composent, peuvent être rendus étanches en obturant leurs deux extrémités.

Les tubes noyés dans la résine permettent d'augmenter le moment d'inertie et la résistance mécanique sans augmenter le poids.

La description suivante se réfère aux dessins annexés qui représentent, sans aucun caractère limitatif, des exemples de réalisation de structures multicanaux selon l'invention.

La figure 1a est une vue éclatée en perspective partielle des constituants d'un demi-produit selon l'invention.

La figure 1b est une coupe transversale partielle du même demi-produit.

La figure 2 est une coupe transversale partielle d'une structure multicanaux selon l'invention.

La figure 3a est une vue éclatée en perspective des constituants d'un deuxième demi-produit selon l'invention.

La figure 3b est une coupe transversale partielle de ce demi-produit.

La figure 4 est une vue en perspective partielle d'une structure courbe selon l'invention comportant une seule couche de canaux.

La figure 5 est une vue en perspective partielle d'une structure courbe selon l'invention comportant deux couches de canaux dont les directions sont entrecroisées.

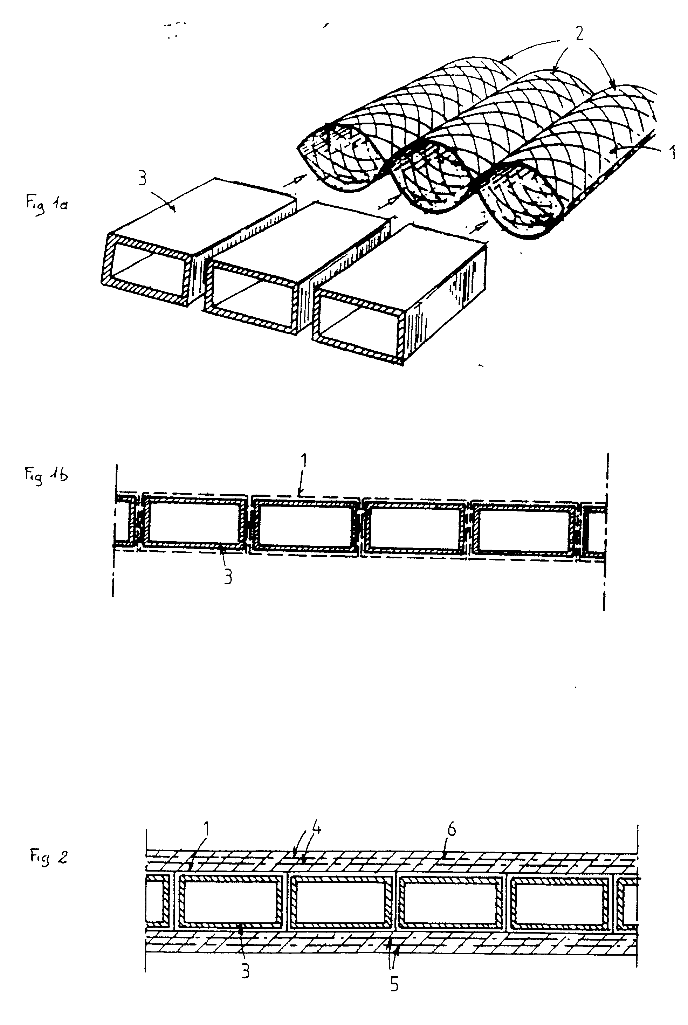

La figure 1a représente un demi-produit utilisé dans le procédé de fabrication de structures multicanaux selon l'invention.

Ce demi-produit comporte un tissu alvéolaire 1, qui est obtenu par le croisement de deux nappes formant ainsi des gaines parallèles juxtaposées 2 s'adaptant à toutes formes de profilé tubulaire 3.

Dans chaque gaine est enfilé un profilaire 3 dont la section transversale rectangulaire est ajustée à celle de la gaine de sorte que celle-ci enveloppe le tube 3 (fig.1b).

La fonction du tissu alvéolaire 1 est de regrouper les tubes 3 dans un demi-produit en forme de nappe qui peut être facilement manipulé. Le tissu alvéolaire 1 peut être un filet ou, de préférence, un tissu serré composé de fibres du type fibres de verre ou de carbone ou toute autre fibre utilisée pour confectionner des armatures de produits stratifiés.

Les profilés tubulaires 3 sont par exemple des tubes pultrudés obtenus par étirage de fibres de verre imprégnées de résine à travers une filière. Ce peut être également des profilés en matière plastique.

La figure 2 représente une coupe transversale partielle d'une structure multicanaux selon l'invention.

On retrouve sur la figure 2 les tubes 3 engagés chacun dans une gaine du tissu alvéolaire 1.

La structure comporte, en outre, une ou plusieurs nappes d'armatures 4 et 5 représentées en traits mixtes qui sont placées de part et d'autre du tissu alvéolaire 1.

Les nappes d'armatures 4, 5 et le tissu alvéolaire 1 sont noyés dans une résine polymérisable 6.

La figure 2 représente par exemple un panneau plan.

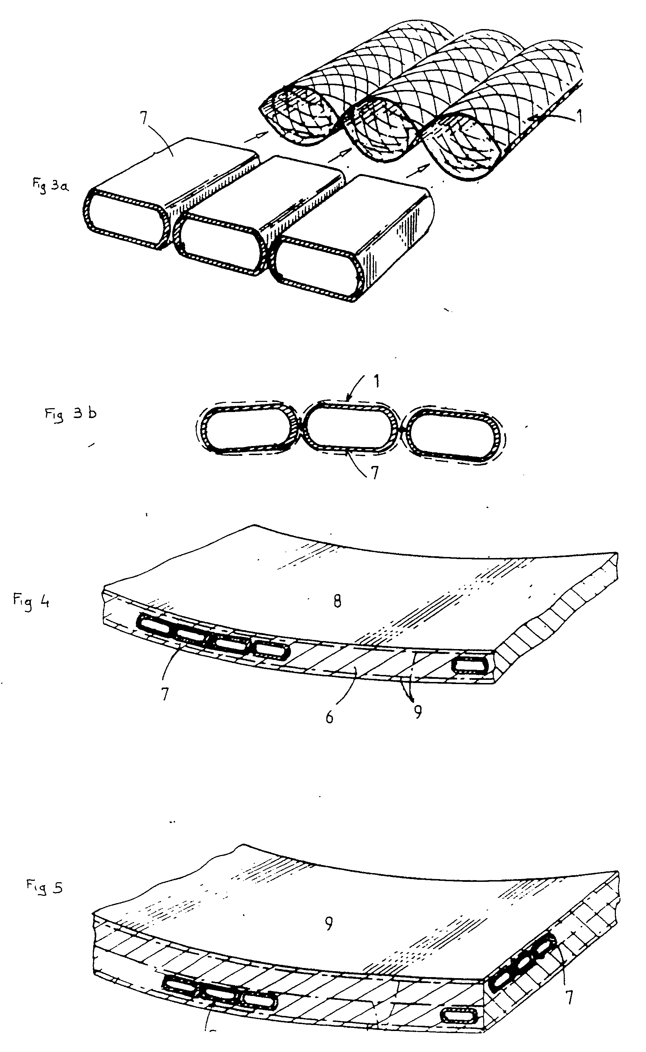

La figure 3 est une vue éclatée en perspective du mode de réalisation d'un autre demi-produit selon l'invention. Celui-ci comporte le même tissu alvéolaire 1.

Dans chacune des gaines est engagé un profilé tubulaire 7, ajusté à celle-ci, ayant par exemple une section transversale de forme générale rectangulaire à flancs arrondis, ou même une section circulaire.

Le tissu 1 est composé, de préférence, d'un tissu en fibres de verre ou de carbone ou toute autre fibre couramment utilisée pour former des armatures dans des produits en matériaux composites.

Les tubes 7 sont par exemple des tubes de verre ou de carbone pultrudés ou des tubes extrudés en résine.

La figure 4 représente une surface courbe 8 fabriquée avec un demi-produit selon la figure 3, qui est noyé dans une résine polymérisée 6 avec interposition entre le demi-produit et les faces latérales d'une ou plusieurs nappes d'armatures externes 9 qui sont représentées en traits mixtes. La surface 8 présente une coubure dans le sens transversal aux axes des tubes 7 et il est possible d'obtenir dans ce sens un rayon de courbure relativement faible car le demi-produit selon la figure 3b peut être facilement cintré dans ce sens.

De plus, en utilisant la flèche du profilé sur une grande longueur il est possible de fabriquer des pièces présentant également une légère courbure dans le sens longitudinal aux tubes.

La figure 5 représente une plaque courbe 9 qui est fabriquée en superposant deux demi-produits selon la figure 3 en entrecroisant les directions des tubes 7, de sorte qu'une telle surface peut résister à des contraintes ayant des directions croisées. Les lignes en traits mixtes 10 représentent des nappes d'armatures placées entre les deux couches et de part et d'autre des tubes.

Si les produits finis sont destinés à aller dans l'eau, par exemple dans le cas de coques de bateaux, les profilés tubulaires 3 ou 7 peuvent être obturés de façon étanche à leurs extrémités et comme ils sont eux-mêmes étanches, l'eau ne risque pas de pénétrer dans l'ensemble des canaux de la structure en cas de destruction locale.

De nombreuses technologies peuvent être utilisées dans un procédé de construction de structures multicanaux selon l'invention.

Selon une première technologie, on met d'abord en place dans le fond d'un moule une ou plusieurs nappes d'armatures externes 7 et on les imprègne de résine polymérisable. On met ensuite en place sur cette première couche le demi-produit constitué par des tubes placés à l'intérieur des gaines d'un tissu alvéolaire et on imprègne le tissu de résine polymérisable. On met enfin en place par dessus une ou plusieurs nappes de la deuxième armature externe que l'on imprègne de résine polymérisable, puis on fait polymériser l'ensemble dans le cas d'une structure à une seule couche de canaux.

Si l'on désire réaliser une structure à plusieurs couches de canaux, entrecroisés ou non, on dépose sur les nappes d'armatures surmontant la première couche, une deuxième couche de demi-produit puis de nouvelles nappes d'armatures et ainsi de suite.

Si l'on veut réaliser des produits présentant une courbure ou une double courbure, on effectue les opérations dans un moule courbe.

Selon une deuxième technologie, les nappes d'armatures externes peuvent être des nappes préimprégnées de résine non entièrement polymérisée. Dans ce cas, il suffit de mettre en place une ou plusieurs nappes d'armatures externes dans le fond d'un moule, puis un demi-produit destiné à constituer l'âme du produit fini sur celle-ci, puis une ou plusieurs nappes d'armatures externes par dessus et de polymériser l'ensemble en température.

Les structures composites multicanaux selon l'invention comportant une ou plusieurs couches superposées de canaux peuvent être utilisées pour fabriquer toutes sortes de structures legères et non corrodables ayant de très bonnes propriétés mécaniques, par exemple des coques de bateaux, des fuselages d'aéronefs, des cloisons, des planchers etc...

Pour fabriquer un produit fini plan comportant plusieurs couches de canaux, on peut fabriquer séparément deux couches multicanaux planes comportant chacune une seule rangée de canaux puis superposer ces deux couches en entrecroisant les directions des canaux et en les collant.

Pour fabriquer un produit fini selon la figure 5, comportant plusieurs couches de canaux et ayant une courbure, il est plus facile de mettre en forme les deux couches l'une après l'autre dans un même moule avant de polymériser la résine.

Selon une troisième technologie, on place le demi-produit sur des couples donnant les courbures souhaitées, on met ensuite sur une des faces une ou plusieurs nappes d'armature, on les imprègne de résine polymérisable et on polymérise. Après retournement de la structure sur l'autre face on met une ou plusieurs nappes d'armature, on les imprègne de résine polymérisable et on polymérise.

Selon une autre technologie, les nappes d'armatures externes peuvent être des nappes imprégnées de résine non entièrement polymérisées. Dans ce cas on procéde de la même façon que ci-dessus. la polymérisation pouvant être valable en une ou deux phases.

Enfin selon une autre technologie, lorsqu'on fabrique des structures multicanaux selon l'invention de forme cylindrique, les nappes d'armatures externes 9, peuvent être réalisées par bobinage, c'est-à-dire en fils qui sont enroulés en hélice de part et d'autre du tissu alvéolaire contenant les profilés tubulaires, cette opération étant réalisée sur une machine à bobiner.

**Revendications**

1. Procédé de fabrication de structures multicanaux à faible masse volumique en matériaux composites, notamment destinées à la réalisation de plaques ou de coques de navires, caractérisé par la suite d'opérations suivantes :

   - on confectionne un tissu alvéolaire obtenu par le croisement de deux nappes formant ainsi des gaines parallèles juxtaposées;
   - on enfile dans chaque gaine un profilé tubulaire ajusté à celle-ci et présentant de hautes caractéristique mécaniques;
   - on met en forme le demi-produit ainsi obtenu;
   - on étend sur chaque face du tissu alvéolaire une ou plusieurs nappes d'armature dont l'orientation est adaptée aux contraintes;
   - et on noie le tissu alvéolaire et les armatures dans une résine polymérisable que l'on polymérise.

2. Procédé selon la revendication 1 pour fabriquer des structures multicanaux planes, caractérisé en ce que les profilés tubulaires sont de section rectangulaire ajustée aux gaines du tissu alvéolaire.

3. Procédé selon la revendication 1 pour la fabrication de structures multicanaux courbes caractérisé en ce que les profilés tubulaires ont une section générale rectangulaire à flancs arrondis ou une section circulaire, ajustée aux gaines du tissu alvéolaire.

4. Procédé selon l'une quelconque des revendications 1 à 3, caractérisé en ce que les nappes d'armature externes (13, 15) sont préimprégnées de résine avant d'être mises en place.

5. Structures multicanaux à faible masse volumique, en matériaux composites, caractérisées en ce qu'elles comportent :
   - un tissu alvéolaire (1) constitué par deux nappes entrecroisées formant des gaines parallèles juxtaposées (2);
   - des profilés tubulaires (3, 7) à haute résistance mécanique qui sont engagés et ajustés chacun à l'intérieur de l'axe des gaines;
   - une ou plusieurs nappes d'armatures externes (4, 5) placées de part et d'autre du tissu alvéolaire contenant les tubes;
   - et de la résine polymérisée (6) qui entoure les tubes et dans laquelle le tissu alvéolaire et les armatures sont noyées.

6. Structure multicanaux selon la revendication 5, caractérisée en ce qu'elle comporte deux tissus alvéolaires superposés garnis de tubes dont les directions sont entrecroisées qui sont placés entre des nappes d'armatures et noyés dans une résine polymérisée.

7. Demi-produit utilisé dans la fabrication de structures multicanaux selon l'une quelconque des revendications 5 et 6, caractérisé en ce qu'il est composé d'un tissu alvéolaire (1) qui délimite des gaines parallèles (2) et de profilés tubulaires (3, 7) qui sont engagés et ajustés chacun dans une des gaines.

8. Structures multicanaux selon la revendication 5, caractérisées en ce que les nappes d'armatures externes sont réalisées par bobinage.

## Claims

1. Producing process for low density composite multichannel structures, in particular designed for producing plates or hulls characterized by the following sequence of operations:
   - a cellular fabric is produced by crossing two layers thus forming parallel, juxtaposed ducts
   - in each duct is inserted a tubular extrusion with high mechanical properties and low density and fitted to the duct
   - the semifinished product thus obtained is formed
   - one or more reinforcement layers, oriented according to the stresses, are extended on each surface of the cellular fabric
   - the cellular fabric and reinforcement are then embedded in a curable resin which is cured.

2. Process as claimed in claim 1 to manufacture flat multichannel structures, in which the tubular extrusions are of rectangular cross section fitting the ducts of the cellular fabric.

3. Process as claimed in claim 1 to manufacture curved multichannel structures, in which the tubular extrusions have a generally rectangular cross section with rounded edges or a circular cross section, fitting the ducts of the cellular fabric.

4. Process as claimed in one of claims 1 to 3, in which the external reinforcement layers (13,15) are preimpregnated with resin before being placed in position.

5. Low density composite multichannel structures, including:
   - a cellular fabric (1) consisting of two crossed layers forming parallel, juxtaposed ducts (2)
   - tubular extrusions (3, 7) with high mechanical strength, each inserted in and fitted to the axis of the ducts
   - one or more external reinforcement layers (4, 5) located on either side of the cellular fabric containing the tubes
   - cured resin (6) surrounding the tubes and in which are embedded the cellular fabric and reinforcements.

6. Multichannel structure as claimed in claim 5, including two stacked cellular fabrics fitted with tubes in crossed directions, placed between the reinforcement layers and embedded in cured resin.

7. Semifinished product used for manufacture of multichannel structures as claimed in one of claims 5 and 6, including cellular fabric (1) delimiting parallel ducts (2) and tubular extrusions (3, 7) inserted in and fitted to each of the ducts.

8. Multichannel structures as claimed in claim 5 in which the external reinforcement layers are made by winding.

## Patentansprüche

1. Herstellungsverfahren von Mehrkanal-Strukturen geringer Dichte, aus Verbundwerkstoffen, insbesondere für die Fertigung von Platten oder Schiffsrümpfen, durch die nachstehend angeführte Prozeßfolge gekennzeichnet:

- Herstellung eines zellenförmigen Gewebes durch Kreuzung zweier Vliese für die Bildung nebeneinander verlaufender paralleler Hüllen,
- Einfügung in jede somit gebildete Hülle eines rohrförmigen, der Hüllenweite angepaßten, mechanisch hochbeanspruchbaren Profils,
- Formgebung des somit erhaltenen Halberzeugnisses,
- Verlegung auf jeder Seite des zellenförmigen Gewebes von einem oder mehreren Verstärkungsvliesen, deren Orientierung den Beanspruchungsrichtungen angepaßt wird,
- Tränkung und Übergießung des zellenförmigen Gewebes sowie der Verstärkungsvliesen mit einem polymerisierbaren Harz und schließlich Polymerisierung des Harzes.

2. Verfahren nach Anspruch 1 für die Herstellung flacher Mehrkanal-Strukturen, dadurch gekennzeichnet, daß die rohrförmigen Profile einen den Hüllen des zellenförmigen Gewebes angepaßten, quadratischen Querschnitt aufweisen.

3. Verfahren nach Anspruch 1 für die Herstellung bogenförmiger MehrkanalStrukturen, dadurch gekennzeichnet, daß die rohrförmigen Profile einen den Hüllen des zellenförmigen Gewebes angepaßten, quadratischen Querschnitt mit abgerundeten Kanten oder einen kreisförmigen Querschnitt aufweisen.

4. Verfahren nach einem beliebigen Anspruch 1 bis 3, dadurch gekennzeichnet, daß die äußeren Verstärkungsvliesen (13, 15) vor deren Verlegung mit Harz vorimprägniert werden.

5. Mehrkanal-Strukturen geringer Dichte, aus Verbundwerkstoffen, dadurch gekennzeichnet, daß sie aus folgenden Komponenten bestehen:

- einem zellenförmigen Gewebe (1) bestehend aus zwei gekreuzten Vliesen, die somit nebeneinander verlaufende parallele Hüllen bilden,
- rohrförmigen, mechanisch hochbeanspruchbaren Profilen (3, 7), die einzeln in jeder Hülle eingefügt und angepaßt werden,
- einem oder mehreren äußeren Vliesen (4, 5), die jenseits des mit den Profilen bestückten, zellenförmigen Gewebes verlegt werden, sowie aus
- einem polymerisierbaren Harz (6), der die Profile umgießt und in welchem das zellenförmige Gewebe sowie die Verstärkungsvliesen getränkt werden.

6. Mehrkanal-Struktur nach Anspruch 5, dadurch gekennzeichnet, daß sie aus zwei überlagerten, mit Profilen versehenen zellenförmigen Geweben besteht, deren Richtungen gekreuzt sind, zwischen Verstärkungsvliesen eingebettet und mit polymerisierbarem Harz getränkt sind.

7. Halberzeugnis, zur Herstellung von Mehrkanal-Strukturen nach einem beliebigen Anspruch 5 oder 6, dadurch gekennzeichnet, daß es aus einem zellenförmigen Gewebe (1) besteht, das parallel verlaufende Hüllen (2) abgrenzt, sowie aus rohrförmigen Profilen (3,7), die in diesen Hüllen eingefügt und angepaßt werden.

8. Mehrkanal-Strukturen nach Anspruch 5, dadurch gekennzeichnet, daß die äußeren Verstärkungsvliesen durch das Aufspulen von Fasern erzeugt werden.

Fig 1a

Fig 1b

Fig 2

Fig 3a

Fig 3 b

Fig 4

Fig 5